# EUROPEAN PATENT SPECIFICATION

(11) **EP 0 299 391 B1**
(45) Date of publication and mention of the grant of the patent: **28.04.1993**
(21) Application number: 88111005.0
(22) Date of filing: 09.07.1988
(51) Int. Cl.: C08F 4/60, C08F 12/00

(54) **Process for production of styrene-based polymers**
Verfahren zur Herstellung von auf Styren basierten Polymeren
Procédé de production de polymères à base de styrène

(30) Priority: 13.07.1987 JP 173007/87
(43) Date of publication of application: 18.01.1989
(73) Proprietor: IDEMITSU KOSAN COMPANY LIMITED, Tokyo 100 (JP)
(72) Inventor: Maezawa, Hiroshi, Sodegaura-machi Kimitsu-gun Chiba-ken (JP); Kuramoto, Masahiko, Sodegaura-machi Kimitsu-gun Chiba-ken (JP); Uoi, Michitake, Sodegaura-machi Kimitsu-gun Chiba-ken (JP)
(74) Representative: Türk, Gille, Hrabal, Leifert

(56) References cited:
- EP-A- 0 108 339
- EP-A- 0 208 561
- EP-A- 0 210 615
- EP-A- 0 224 097
- EP-A- 0 291 536
- FR-A- 1 352 996

## Description

### BACKGROUND OF THE INVENTION

### (1) Field of the Invention

The present invention relates to a process for the production of styrene-based polymers and more particularly to a process for efficiently producing styrene-based polymers (particularly having a syndiotactic structure) by the use of a specified catalyst.

### (2) Description of the Related Art

It is known that in producing olefin-based or styrene-based polymers, a catalyst comprising (A) a transition metal compound and (B) aluminoxane is used (see, for example, Japanese Patent Application Laid-Open Nos. 19309/1983, 95292/1984, 135408/1985, and 31404/1986, EP-A-0210615 and U.S. Patent No. 4,680,353).

The aluminoxane used in the conventional methods is obtained by reacting trialkylaluminum (AlR₃) and crystal water contained in copper sulfate pentahydrate (CuSO₄·5H₂O) etc. The aluminoxane has a unit represented by the general formula: 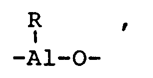
and is a chain-like aluminoxane represented by the general formula: 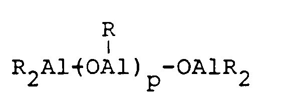
or a cyclic aluminoxane represented by the general formula: 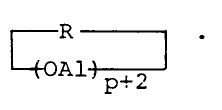
In these formulae, R is an alkyl group having 1 to 6 carbon atoms, and p is an integer of 0 to 100.

Such chain-like or cyclic aluminoxane have activity for polymerization of olefins or styrene, but the activity cannot be said to be sufficiently high.

### SUMMARY OF THE INVENTION

As a result of investigations to develop a process for efficiently producing styrene-based polymers having a syndiotactic structure, it has been found that in polymerizing styrene by the use of a catalyst containing a transition metal compound and aluminoxane as major components, if aluminoxane having a specified structure is used, the catalyst activity is markedly increased.

The present invention provides a process for producing styrene-based polymers having syndiotactic structure by polymerizing styrene or its derivatives in the presence of a catalyst comprising (A) a transition metal compound and (B) aluminoxane, wherein as the aluminoxane (B), aluminoxane having a partially cross-linked structure is used, and wherein the aluminoxane is obtained by reacting trialkylaluminum represented by the general formula (III):

AlR²₃

(wherein R² is an alkyl group having 1 to 8 carbon atoms) and water, and by stopping the reaction at a point that the amount of the alkane formed is 2.05 to 2.50 mol per mol of the trialkylaluminum.

### DESCRIPTION OF THE PREFERRED EMBODIMENTS

The present invention is, as described above, characterized in that as the aluminoxane (B), an aluminoxane having a partially cross-linked structure is used.

The aluminoxane as used herein preferably has two repeating units: a repeating unit represented by the general formula (I): 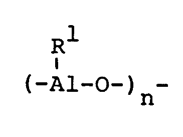
and a repeating unit represented by the general formula (II): 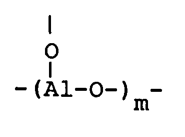
(wherein R¹ is an alkyl group having 1 to 8 carbon atoms, m and n are each an integer of 1 or more, and m+n is an integer of 4 to 60, preferably 8 to 30, more preferably 10 to 24), and has partially cross-linked points.

In the general formula (I), as described above, R¹ is an alkyl group having 1 to 8 carbon atoms, preferably 1 to 4 carbon atoms, and more specifically a methyl group, an ethyl group, or an isobutyl group, for example. Particularly preferred is a methyl group. The aluminoxane of the present invention preferably has a molecular weight as determined by the cryoscopic method using benzene of 200 to 3,000, preferably 400 to 1500, more preferably 500 to 1200.

The aluminoxane as used herein is obtained by reacting trialkylaluminum represented by the general formula (III):

AlR²₃

(wherein R² is an alkyl group having 1 to 8 carbon atoms, preferably 1 to 4 carbon atoms) and water, and can be obtained not by controlling the ratio of water to the trialkylaluminum, but by controlling the amount of alkane generated. That is, by stopping the reaction at a point that the amount of the alkane formed is 2.05 to 2.50 mol, preferably 2.1 to 2.4 mol, more preferably 2.15 to 2.35 mol per mol of the trialkylaluminum, there can be obtained the desired aluminoxane having a partially cross-linked structure.

If the amount of alkane formed is controlled to less than 2 mol, there cannot be obtained an aluminoxane having a cross-linked structure. On the other hand, if the reaction is carried out until the alkane is formed in excess of 2.5 mol, cross-linking proceeds excessively, and as a result of gelation, the aluminoxane undesirably becomes insoluble.

Representative examples of the trialkylaluminum to be used as a starting material in the production of aluminoxane are trimethylaluminum, triethylaluminum and the like. As the water to be added to the above trialkylaluminum, the usual water, solvent saturated water, water adsorbed on inorganic materials, crystal water contained in metal salts, such as CuSO₄·5H₂O, Al₂(SO₄)₃·14-18H₂O, MgSO₄·7H₂O, MgCl₂·6H₂O, etc., and the like can be used.

As the reaction solvent, inert hydrocarbons such as aliphatic hydrocarbons such as hexane, heptane, decane and the like, aromatic hydrocarbons such as benzene, toluene, xylene and the like, and the like can be used. Of these hydrocarbons, benzene, toluene and the like are preferred.

The reaction temperature is -100 to 100°C, preferably -50 to 70°C and more preferably 0 to 60°C . The reaction time is not critical and varies with the reaction temperature. If the reaction temperature is 20°C, it takes 70 hours or more. On the other hand, if it is 40°C and reaction time is sufficient to be 24 hours.

As the transition metal compound to be used as the component (A) in the process of the present invention, compounds of the transition metals of Groups IV to VI of the Periodic Table i.e., titanium, zirconium, hafnium, vanadium, chromium and the like can be used and the suitable one is chosen depending on the type of the desired polymer.

In production of styrene-based polymers, particularly styrene-based polymers having a syndiotactic structure, at least one compound selected from the group consisting of titanium compounds and titanium chelate compounds represented by the general formulae (V) or(VI):

TiR⁶ₐR⁷_{b}R⁸_{c}R⁹_{4-(a+b+c)} (V)

TiR⁶_{d}R⁷ₑR⁸_{3-(d+e)} (VI)

(wherein R⁶, R⁷, R⁸ and R⁹ are each a hydrogen atom, an alkyl group having 1 to 20 carbon atoms, preferably 1 to 10 carbon atoms, an aryl group, an alkylaryl group, an arylalkyl group, having 6 to 20 carbon atoms, preferably 6 to 10 carbon atoms, an acyloxy group having 1 to 20 carbon atoms, preferably 1 to 10 carbon atoms, a cyclopentadienyl group, a substituted cyclopentadienyl group having 5 to 20 carbon atoms, preferably 5 to 10 carbon atoms, an indenyl group, or a halogen atom; a, b and c are each an integer of 0 to 4, and d and e are each an integer of 0 to 3), for example, tetravalent titanium compounds such as methyltitanium trichloride, titanium tetramethoxide, titanium tetraethoxide, titanium monoisopropoxy trichloride, titanium diisopropoxy monochloride, tetra(2-ethylhexyloxy)titanium, cyclopentadienyltitanium trichloride, titanium tetrachloride, titanium tetrabromide, bis(2,4-pentanedionate)titanium oxide, bis(2,4-pentanedionate)titanium dichloride, bis(2 ,4-pentanedionate)titanium dibutoxide, and titanium chelate compounds and the like is used.

As the titanium compound , a condensed titanium compound represented by the general formula (VII): 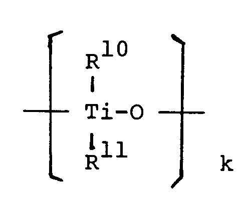
(wherein R¹⁰ and R¹¹ are each a halogen atom, an acyloxy group or an alkoxy group having 1 to 20 carbon atoms, preferably 1 to 10 carbon atoms, and k is 2 to 20, preferably 2 to 10) may be used.

The above titanium compound may be used in the form that it is adsorbed or supported on a carrier such as magnesium compounds, silica, alumina and the like, or as complexes with esters, ethers and the like.

Typical examples of the trivalent titanium compound represented by the general formula (VI) are titanium trihalide such as titanium trichloride and cyclopentadienyltitanium compounds such as cyclopentadienyltitanium dichloride and the like. In addition, those obtained by reducing tetravalent titanium compounds can be used. These trivalent titanium compounds may be used in the form of complexes with esters, ethers and the like.

In the process of the present invention, styrene or its derivatives are polymerized by the use of a catalyst comprising (A) a transition metal compound and (B) aluminoxane having a partially cross-linked structure to produce styrene-based polymers. In this polymerization, the above catalyst components are added to the reaction system, and then styrene or its derivatives as starting materials are introduced in the reaction system.

Polymerization method, conditions and so forth are not critical. Any of solution polymerization, suspension polymerization, gas phase polymerization and so forth can be employed. In addition, the polymerization can be carried out continuously or intermittently.

In connection with the amounts of catalyst components, in the case of solution polymerization or suspension polymerization, the amount of the component (A) is 0.0001 to 0.5 mmol/l and preferably 0.001 to 0.1 mmol/l (calculated as a transition metal atom), and the ratio of the component (B) to the component (A) is, as aluminum atom/transition metal atom, 1 : 1 to 100,000 : 1, preferably 10 :1 to 10,000 : 1 and more preferably 100 : 1 to 5,000 : 1.

In the production of the styrene-based polymers, particularly styrene-based polymers having a syndiotactic structure, a titanium compound as described above is used as the component (A). In this case, the ratio of the component (A) to the component (B) is, as the ratio of aluminum contained in the component (B) to titanium contained in the component (A), i.e., aluminum atom/titanium atom, from 1:1 to 1,000,000:1, preferably from 10:1 to 10,000:1 and more preferably 50:1 to 1,000:1.

Styrene and its derivatives can be polymerized by the process of the present invention. Examples of the styrene derivatives are alkyl-substituted styrenes such as methylstyrene (e.g., p-methylstyrene, m-methylstyrene, o-methylstyrene, and the like), dimethylstyrene (e.g., 2,4-dimethylstyrene, 2,5-dimethylstyrene, 3,4-dimethylstyrene, 3,5-dimethylstyrene, and the like), ethylstyrene (p-ethylstyrene, m-ethylstyrene, and o-ethylstyrene), i-propylstyrene (p-i-propylstyrene, m-i-propylstyrene, and o-i-propylstyrene), tert-butylstyrene (p-tert-butylstyrene, m-tert-butylstyrene, and o-tert-butylstyrene): halogen-substituted styrenes such as p-chlorostyrene, m-chlorostyrene, o-chlorostyrene, p-bromostyrene, m-bromostyrene, o-bromostyrene, p-fluorostyrene, m-fluorostyrene, o-fluorostyrene and the like; and the like.

The polymerization of styrene or styrene derivatives is usually carried out in a hydrocarbon solvent, for example, aliphatic hydrocarbons, alicyclic hydrocarbons, aromatic hydrocarbons and the like. It can also be carried out in the absence of a solvent. Although the polymerization temperature is not critical, it is usually -30 to 120°C, preferably 0 to 100°C and more preferably 10 to 90°C.

Use of aluminoxane having a partially cross-linked structure markedly increases the activity of polymerization for styrene or its derivatives.

As described above, in the production of polystyrene having a syndiotactic structure, the catalyst activity can be markedly increased by using aluminoxane having a partially cross-linked structure.

The present invneiton is described in greater detail with reference to the following examples.

### EXAMPLE 1

### (1) Preparation of Aluminoxane Having Partially Cross-Linked Structure

24 ml (0.25 mol) of trimethylaluminum was dropped at 20°C to a 0.5-liter glass container charged with 200 ml of toluene and 23.7 g (0.095 mol) of copper sulfate pentahydrate, and then they were reacted at 40°C for 24 hours with stirring. At a point that the amount of methane gas generated reached 14.1 liters (CH₄/(CH₃)₃Al=2.30/1 (molar ratio)), solids were removed and subsequently the toluene was distilled away to obtain 6.50 g of methylaluminoxane having a partially cross-linked structure. The molecular weight of the methylaluminoxane, as determined by the cryoscopic method using benzene method, was 710.

### COMPARATIVE EXAMPLE 1

### (1) Preparation of Aluminoxane

47.4 ml (0.492 mol) of trimethylaluminum was dropped at 20°C to a 0.5-liter glass container charged with 200 ml of toluene and 35.5 g (0.142 mol) of copper sulfate pentahydrate, and then they were reacted at 20°C for 24 hours with stirring. At a point that the amount of methane generated reached 17.7 liters (CH₄/(CH₃)₃Al=1.5/1 (molar ratio)), solids were removed and then the toluene was distilled away to obtain 12.4 g of methylaluminoxane. The molecular weight of the methylaluminoxane obtained, as determined by the cryoscopic method using benzene, was 721.

### EXAMPLE 2

### Polymerization of Styrene

In a 500-milliliter polymerization container were introduced at room temperature 100 ml of toluene and 15 mmol (as aluminum equivalent) of methylaluminoxane having a partially cross-linked structure as obtained in Example 1 (1), and then 0.025 mmol of cyclopentadienyltitanium trichloride, and the mixture was heated to 50°C. Then, 17.2 ml of styrene was introduced and polymerized for one hour. After the reaction was completed, the product was washed with hydrochloric acid-methanol and dried to obtain 9.8 g of a polymer. Polymerization activity was 8.2 kg·PS/g·Ti. The polymer was extracted with methyl ethyl ketone by the use of a Soxleht extractor. The extraction residue was 99.3% by weight. For this polymer, the weight average molecular weight was 50,000, the number average molecular weight was 23,000, and in its thermal differential analysis, the melting point was 270°C. The syndiotacticity in terms of the racemic pentad in ¹³C-NMR was 96%.

### COMPARATIVE EXAMPLE 2

### Polymerization of Styrene

The procedure of Example 2 was repeated with the exception that as the methylaluminoxane, methylaluminoxane obtained in Comparative Example 1 (1) was used. As a result, 3.0 g of a polymer was obtained. Polymerization activity was 2.4 kg·PS/g·Ti. The polymer was extracted with methyl ethyl ketone by the use of a Soxleht extractor. The extraction residue was 94.6% by weight. For this polymer, the weight average molecular weight was 44,000, the number average molecular weight was 20,000, and in its thermal differential analysis, the melting point was 270°C. The syndiotacticity in terms of the racemic pentad in ¹³C-NMR was 95%.

## Claims

1. A process for producing styrene-based polymers having syndiotactic structure by polymerizing styrene or its derivatives in the presence of a catalyst comprising (A) a transition metal compound and (B) aluminoxane, wherein as the aluminoxane (B), aluminoxane having a partially cross-linked structure is used, and wherein the aluminoxane is obtained by reacting trialkylaluminum represented by the general formula (III):
AlR²₃
(wherein R² is an alkyl group having 1 to 8 carbon atoms) and water, and by stopping the reaction at a point that the amount of the alkane formed is 2.05 to 2.50 mol per mol of the trialkylaluminum.

2. The process as claimed in claim 1, wherein the aluminoxane has two repeating units: a repeating unit represented by the general formula (I): 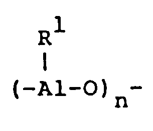 and a repeating unit represented by the general formula (II): 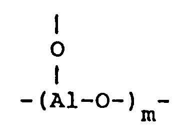 (wherein R¹ is an alkyl group having 1 to 8 carbon atoms, m and n are each an integer of 1 or more, and m+n is an integer of 4 to 60), and has partially cross-linked points.

## Patentansprüche

1. Verfahren zur Herstellung auf Styrol basierender Polymere mit syndiotaktischer Struktur durch Polymerisation von Styrol oder seiner Derivate in Gegenwart eines Katalysators, welcher (A) eine Übergangsmetallverbindung und (B) Aluminoxan umfaßt, worin als Aluminoxan (B), ein Aluminoxan mit einer partiell vernetzten Struktur verwendet wird, und worin das Aluminoxan erhalten wird, durch Reagieren von Trialkylaluminium, dargestellt durch die allgemeine Formel (III):
AlR²₃
(, worin R² eine Alkylgruppe mit 1 bis 8 Kohlenstoffatomen ist) und Wasser und Abbruch der Reaktion an dem Punkt, an dem die Menge des gebildeten Alkans von 2,05 mol bis 2,50 mol pro mol Trialkylaluminium beträgt.

2. Verfahren nach Anspruch 1, worin das Aluminoxan zwei Wiederholungseinheiten aufweist: eine Wiederholungseinheit, dargestellt durch die allgemeine Formel (I): 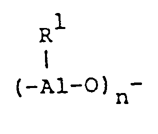 und eine Wiederholungseinheit, dargestellt durch die allgemeine Formel (II): 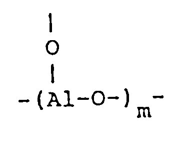 (, worin R¹ eine Alkylgruppe mit 1 bis 8 Kohlenstoffatomen ist, m und n jeweils ganze Zahlen von 1 oder mehr sind, und m+n eine ganze Zahl von 4 bis 60 ist,) und partiell vernetzte Stellen aufweist.

## Revendications

1. Procédé de production de polymères à base de styrène, présentant une structure syndiotactique, par polymérisation du styrène ou de ses dérivés en présence d'un catalyseur comprenant (A) un composé de métal de transition et (B) de l'aluminoxane, dans lequel on utilise, comme aluminoxane (B), un aluminoxane de structure partiellement réticulée, et dans lequel on obtient l'aluminoxane en faisant réagir un trialkylaluminium représenté par la formule générale (III):
AlR²₃
(dans laquelle R² est un groupe alkyle en C₁₋₈) avec de l'eau, et en arrêtant la réaction lorsque la proportion de l'alcane formé est de 2,05 à 2,50 moles/mole de trialkyaluminium.

2. Procédé tel que revendiqué dans la revendication 1, dans lequel l'aluminoxane possède deux motifs répétitifs: un motif répétitif représenté par la formule générale (I): 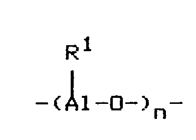 et un motif répétitif représenté par la formule générale (II): 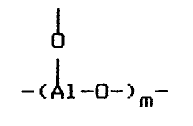 (dans lesqelles R¹ est un groupe alkyle en C₁₋₈, m et n sont chacun un nombre entier égal ou supérieur à 1, et m+n est un nombre entier valant de 4 à 60), et présente des points partiellement réticulés.
